# EUROPÄISCHE PATENTANMELDUNG

(11) **EP 0 734 192 A2**
(43) Veröffentlichungstag der Anmeldung: **25.09.1996**
(21) Anmeldenummer: 96103351.1
(22) Anmeldetag: 04.03.1996
(51) Int. Cl.: H04Q 7/34, H04B 17/00

(54) **Einrichtung zum Funktionstest von Mobilstationen**

(30) Priorität: 22.03.1995 DE 19510388
(71) Anmelder: SIEMENS AKTIENGESELLSCHAFT, 80333 München (DE)
(72) Erfinder: Erben, Christian, Dipl.-Ing., 85386 Eching (DE)

(57) **Zusammenfassung**

Die Einrichtung zum Funktionstest von Mobilstationen enthält eine externe Interfacebox, die über eine Standard serielle Schnittstelle an die Mobilstation angebunden und an einen Systemsimulator anschließbar ist.

## Beschreibung

Die Erfindung bezieht sich auf eine Einrichtung zum Funktionstest von Mobilstationen mittels eines an einen Systemsimulator anschließbaren Interface.

Für die Testbarkeit bestimmter Funktionen, beispielsweise der Funktionen Audio und Voice Coding einer Mobilstation, ist in den Empfehlungen für das Mobilfunksystem GSM (Groupe Special Mobile) ein spezielles Interface für die Anbindung der Mobilstation an einen Systemsimulator vorgesehen. Dieses Interface besteht aus zwei Test Controlsignalen, einem Reset Signal, einem Clock Signal, einem Datenausgangssignal, einem Dateneingangssignal und der Ground Leitung. In den Empfehlungen ist auch das Protokoll der Schnittstelle beschrieben, bei deren Verwirklichung bestehen jedoch individuelle Gestaltungsmöglichkeiten.

Der Erfindung liegt die Aufgabe zugrunde, eine einfache Einrichtung zum Funktionstest von Mobilstationen zu schaffen.

Bei einer Einrichtung der eingangs beschriebenen Art wird diese Aufgabe gemäß der Erfindung gelöst durch eine externe Interfacebox, die über eine Standard-serielle Schnittstelle an die Mobilstation angebunden ist.

Vorteilhafte Ausgestaltungen und Weiterbildungen des Erfindungsgegenstandes sind in den Unteransprüchen angegeben.

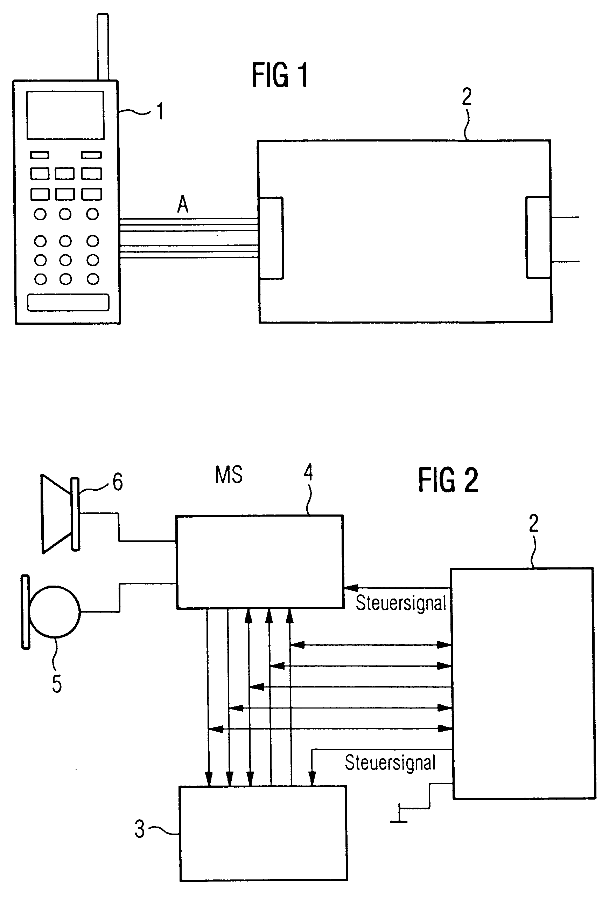

Nachstehend wird die Erfindung anhand von in der Zeichnung dargestellten Ausführungsbeispielen näher erläuert. Dabei zeigen die Figuren 1 bis 5 verschiedene Konfigurationen für die Bereitstellung des Interface für Funktionstests mit dem Systemsimulator.

Figur 1 zeigt eine Anordnung einer aus einem Handheld 1 bestehenden Mobilstation und einer über die Schnittstelle A mit dem Mobiltelefon verbundenen Interfacebox 2, die Anschlüsse zu einem in der Figur nicht dargestellten Systemsimulator aufweist. Mit dieser Konfiguration ist es möglich, die Schnittstelle A so anzupassen, daß für die Realisierung im Mobilfunkgerät kein Zusatzaufwand nötig wird. Für die Realisierung der Schnittstelle im Gerät ist dabei entscheidend, welche Elemente der Mobilstation von der Prüfung des Systemsimulators beispielsweise über DAI (Digital Audio Interface) betroffen sind. Die Funktion Voice Coder wird vorzugsweise in einem Signalprozessor im Mobilfunkgerät abgearbeitet, die Funktion Audio Wandler kann je nach Integrationsgrad und Integrationsweise in einem separaten Baustein oder ganz bzw. teilweise im vorgenannten Signalprozessor realisiert sein. Trotz der unterschiedlichen Implementationen in verschiedenen Bausteinen bzw. Bausteinformen können die Kosten für die Schnittstelle zur Interfacebox minimal gehalten werden durch Benutzung einer seriellen Schnittstelle, wie sie gängige Bausteine für Audio Wandler, Signalprozessor, Signalprozessorfamilie und Signalverarbeitungsbaustein besitzen.

Figur 2 zeigt eine Konfiguration für die Realisation der Schnittstelle zur Interfacebox, bei der die Interfacebox 2 an die geräteinterne Schnittstelle zwischen Signalprozessor 3 und Wandler 4 angeschlossen ist. Hierbei sind Signalleitungen für das Steuersignal für den Wandler und den Signalprozessor von der Interfacebox 2 zum Audio-Wandler 4 bzw. zum Signalprozessor 3 geführt, die übrigen Signalleitungen befinden sich zwischen der Interfacebox 2 und den Verbindungsleitungen zwischen Audio-Wandler 4 und Signalprozessor 3. In der in der Figur links von der strichlierten Linie befindlichen Mobilstation MS sind ferner ein Mikrofon 5 und ein Lautsprecher 6 eingezeichnet, die an den Audio-Wandler 4 angeschlossen sind. Je nach Test (Voice Coder oder Audio-Wandler) selektiert die Interfacebox 2 den zu testenden Teil. Der nicht selektierte Teil gibt die Schnittstelle durch Übergang in den Tristate Zustand frei.

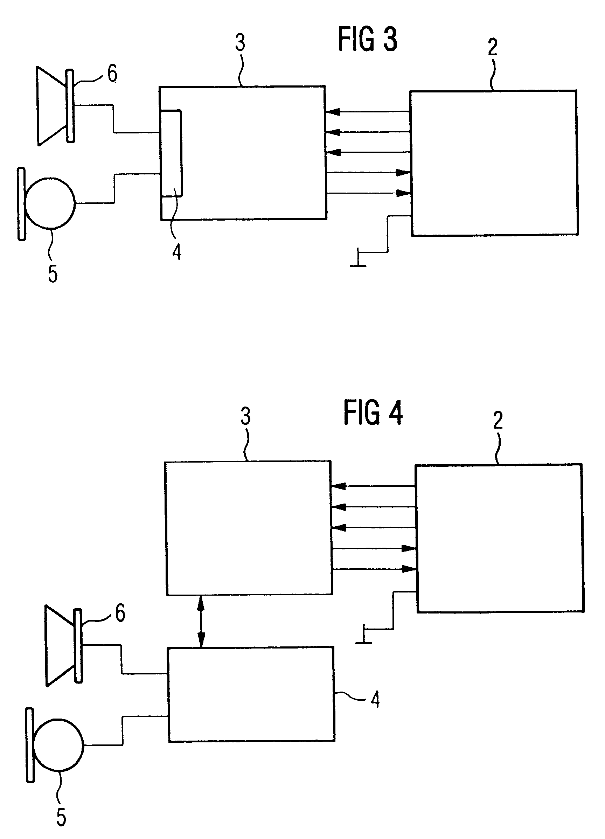

Figur 3 zeigt eine Konfiguration, bei der der Wandler im Signalprozessor 3 integriert ist. Die Interfacebox 2 ist hier an eine freie serielle Schnittstelle des Signalprozessors 3 angeschlossen. Da der Wandler im Signalprozessor integriert ist, werden bei den Audiotests die Daten von der Interfacebox 2 zum Wandler und umgekehrt über eine Softwareroutine im Signalprozessor 3 des Mobilfunkgerätes transferiert. Der Vorteil dieser Konfiguration besteht darin, daß eine Vor- bzw. Nachverarbeitung der Wandlersignale durch den Signalprozessor im Mobilfunkgerät möglich ist (Echounterdrückung, Geräuschunterdrückung, Lautstärkeregelung, Frequenzgänge). Die analoge Vorverarbeitung kann dadurch erheblich vereinfacht werden.

Ähnlich wie bei der Konfiguration nach Figur 3 wird bei der Konfiguration nach Figur 4 die Interfacebox 2 an eine freie serielle Schnittstelle des Signalprozessors 3 (GOLD SP) angeschlossen. Der Datenaustausch im Testfall Voice Coder erfolgt ausschließlich zwischen Signalprozessor 3 und Interfacebox 2. Bei dem Test der Audiofunktionen reicht der Signalprozessor 3 die Daten des Wandlerbausteins 4 mit möglicher Vor- bzw. Nachverarbeitung an die Interfacebox 2 weiter.

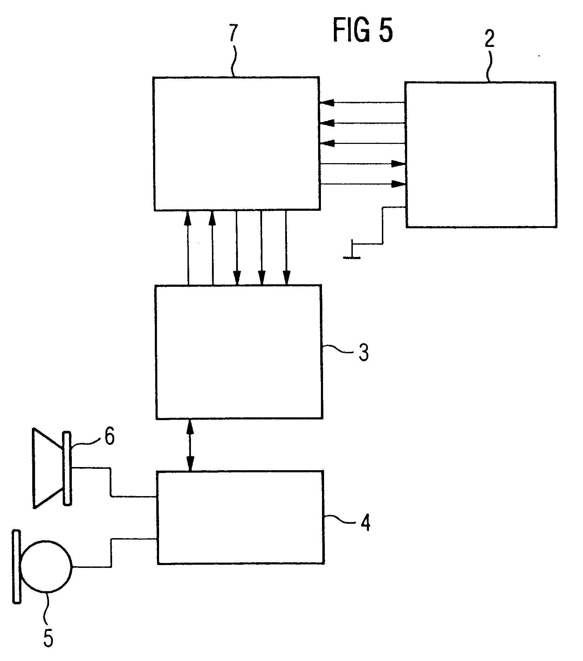

Figur 5 zeigt eine Konfiguration für den Fall, daß weitere zusätzliche sprachverarbeitende Komponenten (Halfrate Speech Algorithmus, Anrufbeantworter, Echoentzerrer, Geräuschkompensation) in das Mobilfunkgerät implementiert werden und dabei die verfügbare Rechenleistung des Signalprozessors 3 (GOLD SP) nicht ausreicht. Hierfür ist ein weiterer Signalprozessor 7 als Coprozessor vorgesehen, der zwischen Interfacebox 2 und Signalprozessor 3 eingeschaltet ist. Die Daten von und zu der Interfacebox 2 werden dabei je nach Testfall zu den einzelnen Komponenten durchgereicht.

## Patentansprüche

1. Einrichtung zum Funktionstest von Mobilstationen mittels eines an einen Systemsimulator anschließbaren Interface, **gekennzeichnet** durch eine externe Interfacebox, die über eine Standard-serielle Schnittstelle an die Mobilstation angebunden ist.

2. Einrichtung nach Anspruch 1, dadurch **gekennzeichnet**, daß die Interfacebox an die geräteinterne Schnittstelle zwischen Signalprozessor und Wandler der Mobilstation angeschlossen ist.

3. Einrichtung nach Anspruch 1, dadurch **gekennzeichnet**, daß die Interfacebox an eine freie serielle Schnittstelle eines Signalprozessors der Mobilstation angeschlossen ist.

4. Einrichtung nach Anspruch 3 mit einem im Signalprozessor integrierten Wandler, dadurch **gekennzeichnet**, daß bei Audio-tests die Daten von der Interfacebox zum Wandler und umgekehrt über eine Softwareroutine im Signalprozessor des Mobilgerätes transferiert werden.

5. Einrichtung nach Anspruch 1, dadurch **gekennzeichnet**, daß die Interfacebox an eine freie serielle Schnittstelle des Signalprozessors angeschlossen ist.

6. Einrichtung nach Anspruch 5, dadurch **gekennzeichnet**, daß der Datenaustausch im Testfall Voice Coder ausschließlich zwischen Signalprozessor und Interfacebox erfolgt.

7. Einrichtung nach Anspruch 5, dadurch **gekennzeichnet**, daß beim Test der Audio-Funktionen der Signalprozessor die Daten des Wandlers mit möglicher Vor- und Nachverarbeitung an die Interfacebox weiterreicht.

8. Einrichtung nach Anspruch 1, dadurch **gekennzeichnet**, daß bei Implementierung weiterer zusätzlicher Komponenten in das Mobilgerät die Daten von und zu der Interfacebox je nach Testfall zu den einzelnen Komponenten durchgereicht werden.

9. Einrichtung nach Anspruch 8, **gekennzeichnet** durch die Verwendung in einer GSM/PCN-Mobilfunkstation.
